**Europäisches Patentamt**

**European Patent Office**

**Office européen des brevets**

(19)

(11) Numéro de publication : **0 388 261 B1**

(12) # FASCICULE DE BREVET EUROPEEN

(45) Date de publication du fascicule du brevet :
**12.05.93 Bulletin 93/19**

(51) Int. Cl.⁵ : **A23L 1/20,** A23B 7/06,
A23B 9/00

(21) Numéro de dépôt : **90400633.5**

(22) Date de dépôt : **09.03.90**

(54) Grain de haricot et son procédé de traitement.

Le dossier contient des informations
techniques présentées postérieurement au
dépôt de la demande et ne figurant pas dans le
présent fascicule.

(30) Priorité : **14.03.89 FR 8903322**

(43) Date de publication de la demande :
**19.09.90 Bulletin 90/38**

(45) Mention de la délivrance du brevet :
**12.05.93 Bulletin 93/19**

(84) Etats contractants désignés :
**AT BE CH DE DK ES FR GB GR IT LI LU NL SE**

(56) Documents cités :
**CH-A- 339 039**

(56) Documents cités :
**GB-A- 2 088 695**
**US-A- 2 278 475**
**US-A- 3 139 345**
**FOOD TECHNOLOGY, vol. 18, no. 12, décembre 1964, pages 121-126, Institute of Food Technologists, Chicago, US; K.H. STEINKRAUS et al.: "Some studies on the production of precooked dehydrated beans"**

(73) Titulaire : **R C L**
**29, Boulevard Charles Nédélec**
**F-13003 Marseille (FR)**

(72) Inventeur : **Minier, Chantal**
**45 Avenue Louis Armand**
**F-38 180 Seyssins (FR)**

(74) Mandataire : **Bourgognon, Jean-Marie et al**
**Cabinet Flechner 22, Avenue de Friedland**
**F-75008 Paris (FR)**

EP 0 388 261 B1

## Description

La présente invention est relative aux grains de haricot et à leur procédé de traitement.

La mise à disposition du consommateur de haricots cuits, prêts à être consommés, éventuellement après avoir été réchauffés, s'effectue habituellement sous forme de haricots en conserve. Le procédé de traitement consiste essentiellement en un trempage d'au moins 12 heures, suivi d'un blanchiment avant mise en conserve sous couverture liquide. L'homogénéité de l'hydratation des grains de haricots est atteinte parce que l'on opère en présence d'un excès d'eau ou de jus et parce que l'on pousse l'hydratation à son maximum. Mais, ainsi, on obtient des haricots qui n'ont pas une texture ferme.

On a proposé au US-A-2 278 475 un procédé de traitement des haricots, mais aussi des lentilles, des pois, du soja et autres par un traitement d'explosion favorisant l'éclatement des cellules. On met les haricots dans une enceinte fermée entre 121 et 288°C, sous une pression élevée pendant une certaine durée. Puis on réduit instantanément la température et la pression pour provoquer une rupture de la structure. Les haricots ainsi traités sont peu fermes et prennent une couleur brune. Les teneurs en eau et les duretés varient beaucoup d'un grain à l'autre d'un même lot.

L'invention remédie à ces inconvénients par un procédé de traitement des grains de haricots qui, tout en étant considérablement écourté par rapport aux procédés classiques, améliore la qualité bactériologique de la matière première par une pasteurisation et par la suppression des phénomènes de fermentation observés dans le cas de trempages longs, en donnant des haricots cuits plus fermes conservant leur couleur naturelle, qui sont mieux appréciés du consommateur.

L'invention a donc pour objet un procédé de traitement des grains de haricots qui consiste en un traitement à la vapeur sous la pression atmosphérique entre 100 et 120°C.

Ce traitement confère la perméabilité requise au grain de haricot, alors que ce même traitement, appliqué à la lentille ou au pois-chiche, est inefficace à cet effet. On peut ainsi améliorer la qualité bactériologique de la matière première par la pasteurisation due au traitement à la vapeur et écourter considérablement le trempage ultérieur, ce qui diminue les phénomènes de fermentation à ce stade, tout en obtenant non seulement des teneurs en eau adéquates mais, de plus, en bonne uniformité de ces teneurs d'un grain de haricot à l'autre d'un même lot.

Le temps d'application de la vapeur, pour une même qualité de haricot, varie de façon inversement proportionnelle à la température et au débit de vapeur utilisé. La consommation de vapeur peut représenter, par exemple, 0,75 kg de vapeur saturée à 100°C par kg de haricots à traiter pour une durée de traitement de 60 minutes. On effectue le traitement à la vapeur entre 100 et 120°C pendant 5 à 70 minutes. Cette durée de traitement varie aussi en fonction de la qualité des haricots, par exemple de 5 minutes pour une variété de flageolets à 70 minutes pour une variété de lingots.

Au document Food Technology Vol. 18 n° 12 p 121 à 126 (1964) on traite des haricots à la vapeur à 99,9°C pendant 15 minutes seulement. Le produit de la température par le temps est trop petit pour obtenir les résultats suivant l'invention, le document mentionnant l'hétérogénéité des haricots obtenus dans leur aptitude à absorber l'eau.

Le grain de haricot non cuit, dont l'indice de brun est (100-L) L étant la luminance, obtenu après traitement à la vapeur est perméable à l'eau, comme le prouve le fait qu'il se colore uniformément en rose après une immersion de 30 minutes dans un bain aqueux de fushine. L'essai consiste à tremper les haricots dans un bain de fushine basique (Fluka) comprenant 2,5 g de fushine, 100 ml d'alcool éthylique à 95° et de l'eau distillée pour compléter à 1000 ml. Le pH du bain est de 5.

Le grain de haricot traité fixe le colorant, alors que pour un haricot naturel, non traité à la vapeur, la fushine glisse à la surface en n'y laissant que quelques traces.

Pendant le traitement à la vapeur, la teneur pondérale en eau du haricot passe, pour la variété lingots, d'une valeur comprise entre 8 à 13 % à une valeur comprise entre 13,2 et 18 %, pour la variété cocos, d'une valeur comprise entre 8 et 15 % à une valeur comprise entre 13,2 et 20 % et, pour la variété flageolets, d'une valeur comprise entre 12,5 à 20 % à une valeur comprise entre 12,5 et 23,5 %.

Il est néfaste d'appliquer le traitement à la vapeur d'eau au-delà de la durée prescrite. Cela provoque un effet de dégradation de la couleur des haricots qui prennent une couleur brune.

On trempe ensuite les haricots ayant subi le traitement à la vapeur dans de l'eau à une température comprise entre 6°C et 80°C pendant 12 à 60 minutes. On diminue d'autant plus la durée de trempage que la température de l'eau qui est utilisée est plus élevée. C'est ainsi que, pour les haricots cocos, 60 minutes à 20°C sont équivalentes à 12 minutes à 80°C. Par souci de commodité, on préfère effectuer le trempage à la température ambiante (15 à 25°C). L'hydratation des haricots s'effectue, non seulement en une durée très écourtée par rapport à l'état antérieur de la technique, mais surtout les teneurs en eau d'un grain de haricot à l'autre, d'un même lot, ayant subi le même traitement, sont très homogènes. Pour les lingots, la teneur pondérale en eau prend une valeur comprise entre 42,5 et 45,5 %, pour les cocos entre 44 et 48,5 %, et pour les flageolets entre 48,5 et 53 %.

On effectue ensuite un blanchiment ou une précuisson à l'eau des haricots ayant subi l'opération de trempage. Ce blanchiment s'effectue à l'eau à une température comprise entre 85°C et 100°C, pendant une durée de 10 à 15 minutes, en fonction de la température choisie. Ce traitement a pour but d'obtenir la teneur en eau définitive souhaitée. Il permet également de traiter éventuellement les haricots au disulfite de sodium. On peut fixer le pH à 3 par une addition d'acide citrique. A titre d'exemple, une précuisson à l'eau de la variété cocos pendant 10 à 11 minutes donne une teneur pondérale moyenne en eau de 56,2 %, une précuisson de 10 minutes des lingots donne une teneur pondérale finale moyenne de 54,7 % et une précuisson de 12 minutes des flageolets leur donne une teneur pondérale en eau moyenne de 60,5 %. Les haricots ont une dureté Instron comprise entre 5 et 8, alors qu'avant stérilisation des haricots traités suivant le brevet US-A-2 278 475 sont plus mous en ayant une dureté Instron comprise entre 3 et 4, sont plus bruns et ont des duretés et des humidités plus hétérogènes d'un grain à l'autre d'un même lot.

Mais on peut aussi effectuer le trempage et le blanchiment en une seule opération à une température de 85°C à 100°C, pendant 8 à 30 minutes.

On égoutte ensuite les haricots à l'eau froide à la température ambiante et on les emballe, de préférence dans des sachets ou des barquettes souples, sous une pression absolue d'air ou de gaz inerte comprise entre 0,3 et 1 bar et de préférence, entre 0,3 et 0,8 bar dans un emballage étanche aux liquides, aux gaz et aux micro-organismes. On emballe les haricots sans jus et sans couverture liquide, sans rechercher, comme auparavant suivant l'état de la technique, à leur faire absorber de l'eau. On stérilise ensuite l'emballage en autoclave en appliquant le barème temps/température nécessaire pour assurer la stérilité commerciale des haricots. On obtient ainsi un lot de grains de haricots cuits dont tous les grains ont une teneur pondérale en eau comprise entre 55 et 58 % et une dureté Instron comprise entre 1,5 et 4, quand ils sont de la variété cocos ou lingots, et une teneur pondérale en eau comprise entre 58 et 61 % et une durée Instron comprise entre 1 t 3 quand ils sont de la variété flageolets. Sur un échantillon de 10 haricots cocos ou lingots d'un même lot, l'écart-type de la dureté Instron est inférieur à 0,60 alors que l'écart-type est supérieur à 0,60 pour 10 haricots cocos ou lingots d'un même lot traités par le procédé décrit au brevet des E.U.A. précité. Le plus souvent, l'écart-type est inférieur à 0,50. Pour la variété flageolets, l'écart-type est inférieur à 0,30 suivant l'invention, alors qu'il est supérieur à cette valeur dans les techniques antérieures.

On effectue les mesures de dureté à l'aide de la machine Instron, modèle 4301 et équipée d'une cellule de 100 newton. Le pénétromètre a un diamètre de 1,62 mm et sa vitesse est de 10 mm/minute. On mesure, pour chaque grain, la force correspondant au premier pic, qui est la force en newton nécessaire à la rupture de la peau et de l'intégrité du grain.

Grâce au traitement à la vapeur préalable, on peut se rendre maître de la teneur en eau des grains de haricots après trempage, de manière à la régler dans une plage étroite, en sorte que la teneur en eau finale des produits cuits peut être, elle aussi, réglée étroitement et être inférieure aux valeurs moyennes habituellement obtenues. La dureté des grains de haricots cuits est ainsi sensiblement supérieure à celle qu'ils ont habituellement.

Quand on mesure la couleur des haricots au colorimètre Minolta CR 221, illuminant D65 par le système L a b, L étant la luminance, a>o l'indice de rouge, a<0 l'indice de vert, b>0 l'indice de jaune, b<O l'indice de bleu, la valeur 100-L (indice de brun) est d'autant plus grande que la couleur est plus brune. Les haricots suivant l'invention ont une valeur de 100-L inférieure à 50.

Les exemples suivants illustrent l'invention.

## EXEMPLE 1

### Haricots blancs de type lingots.

On place les haricots secs ayant une teneur en eau de 12 % sur un tapis perforé, à travers lequel passe de la vapeur saturée à 100°C. On effectue ce traitement à la vapeur pendant 50 minutes. La teneur pondérale en eau des haricots, après le traitement à la vapeur, est de 19,7 %.

On trempe les haricots dans de l'eau froide à 20°C pendant 50 minutes. La teneur pondérale en eau, après le trempage, est de 48,3 %.

On plonge les haricots, ayant subi un trempage, pendant 10 minutes dans de l'eau à ébullition à laquelle on ajoute éventuellement 4 g/litre de métabisulfite de sodium et 2 g/litre d'acide citrique. La teneur pondérale en eau des haricots, après cette opération, est de 55,7 %.

On égoutte les haricots, on les rince à l'eau courante, puis on les égoutte. On les emballe dans des sachets ou des barquettes souples (complexes aluminium) en lots de 250 g, avec une pression résiduelle absolue d'air dans la barquette de 0,65 bar.

Pour atteindre une valeur stérilisatrice de 15, c'est-à-dire la durée en minutes nécessaire pour obtenir à 250°F la "stérilité commerciale", (cf. J.C. Cheftel, Henri Cheftel, Pierre Besançon, Introduction à la Biochimie et à la Technologie des Aliments, Vol. 2, 1977), on stérilise pendant 25 minutes à 125°C. La teneur pondérale en eau des lingots cuits est comprise entre 55 et 57 %. Leur dureté Instron a une valeur moyenne de 2,3 et un écart-type de 0,5, ce que l'on exprime dans le présent mémoire par 2,3 ± 0,5, alors qu'elle est de 12,1 ± 3,3 après le trempage, et de 5,7 ± 1,5 après la précuisson.

## EXEMPLE 2

Haricots de type cocos.

On reprend l'exemple 1, mais sur des haricots de type cocos. Leur teneur pondérale initiale en eau est de 14,1 %. Après le traitement à la vapeur, elle est de 19,9 %. On effectue le trempage pendant 60 minutes. La teneur pondérale en eau des haricots est de 47,7 %. On effectue la précuisson à 100°C pendant 11 minutes pour obtenir une teneur pondérale en eau des haricots de 56,2 %. La teneur pondérale finale en eau des haricots cuits est comprise entre 55 et 56,5 % et leur dureté Instron est de 2,3 ± 0,3, alors qu'elle est de 12,7 ± 2,7 après trempage et de 8 ± 2 après précuisson.

## EXEMPLE 3

Flageolets.

On reprend l'exemple 1, mais sur des flageolets. Leur teneur pondérale initiale en eau est de 15,3 %. Après le traitement à la vapeur, la teneur pondérale en eau est de 23,1 %. Après le trempage qui s'effectue pendant 60 minutes, elle est de 52,1 %. Après la précuisson, qui s'effectue pendant 12 minutes, elle est de 60,5 %.

La dureté Instron des flageolets stérilisés et prêts à être mis à la disposition des consommateurs est de 1,5 ± 0,2. Après trempage, cette dureté est de 10,6 ± 1,8. Après la précuisson, elle est de 4,3 ± 0,9.

## EXEMPLE COMPARATIF 1

On traite des pois-chiches ayant une teneur pondérale en eau de 10 % par de la vapeur, comme indiqué à l'exemple 1. On trempe ensuite les pois-chiches pendant 2 heures et 8 heures dans de l'eau froide à 20°C. Les teneurs pondérales en eau deviennent égales à 42 % et à 48,3 %, respectivement.

On effectue le même traitement de trempage sur des pois-chiches qui n'ont pas été traités à la vapeur auparavant. Après 2 heures de trempage, la teneur pondérale en eau est de 39,6 %, après 8 heures, elle est de 53,4 %, après 12 heures, elle est de 57,0 %. Le traitement préalable à la vapeur n'a pas accéléré l'absorption d'humidité au trempage.

## EXEMPLE COMPARATIF 2

On traite des lentilles vertes, ayant une teneur en eau de 13 %, par de la vapeur comme à l'exemple 1, mais pendant 47 minutes.

On fait suivre d'un blanchiment à 100°C pendant 15 minutes. La teneur en eau devient égale à 55 %.

On soumet des lentilles vertes, ayant une teneur en eau de 13 %, à un blanchiment à 100°C pendant 15 minutes. La teneur en eau devient égale à 55 %.

Le traitement à la vapeur est dénué d'efficacité et est même nuisible car les lentilles traitées à la vapeur ont une couleur plus foncée et une amertume plus grande.

Dans tous les exemples, on a déterminé la teneur en eau en pesant environ 5 g de l'échantillon dans un récipient, en plaçant le récipient dans une étuve préalablement chauffée à 103°C, en laissant sécher à l'étuve pendant 6 heures, en retirant le récipient de l'étuve et en le plaçant dans un dessicateur jusqu'à refroidissement, et en pesant à nouveau le produit. La teneur en eau, exprimée en pourcentage, est égale à $(M0-M1) \times 100/M0$ avec $M0$ = masse en g de la prise d'essai et $M1$ = masse en g de la prise d'essai après séchage.

## EXEMPLE COMPARATIF 3

On met des haricots blancs secs, de type cocos sur un tapis perforé, puis on les traite à la vapeur saturée sous pression dans une enceinte fermée. La durée de ce traitement à la vapeur est de 50 minutes, comme

**4**

prévu au US-A-2 278 475.

Les haricots sont ensuite instantanément sortis de l'enceinte hermétique et refroidis. La teneur pondérale en eau des haricots passe au cours de ce traitement de 9,4 % à 14,8 %.

On effectue ensuite un blanchiment des haricots à l'eau bouillante et à pression atmosphérique (100°C) pendant 3 minutes. La teneur pondérale en eau, à la fin du blanchiment, est de 37,9 %.

Puis les haricots sont stérilisés dans de l'eau salée à 18 g de NaCl/l, pendant 45 minutes à 115,6°C. La teneur pondérale en eau est alors de 60 %.

On soumet à l'essai de dureté Instron deux échantillons de 10 haricots de ce même lot. Les résultats sont indiqués au tableau I.

## EXEMPLES COMPARATIFS 4 ET 5

On reprend l'exemple comparatif 3 sur des haricots lingots et flageolets respectivement en obtenant les duretés indiquées au tableau I.

## EXEMPLE 4

On reprend les exemples 1 à 3 en mesurant la dureté des haricots cuits obtenus, comme à l'exemple comparatif 3. Les résultats sont consignés au tableau II. On note les plus grandes duretés obtenues et les écarts-types plus petits par rapport aux résultats du tableau I.

Au tableau III, on a consigné les couleurs des haricots des exemples 1 à 3 et des exemples comparatifs 3 à 5.

## TABLEAU I

|  | Haricots cocos | | Haricots lingots | | Haricots flageolets | |
|---|---|---|---|---|---|---|
| 1 | 1,53 | 6,94 | 2,39 | 4,31 | 0,50 | 1,77 |
| 2 | 7,19 | 5,62 | 3,97 | 2,89 | 2,00 | 0,45 |
| 3 | 1,59 | 3,73 | 2,20 | 3,90 | 0,64 | 0,47 |
| 4 | 5,70 | 5,78 | 3,44 | 1,86 | 0,42 | 1,53 |
| 5 | 4,20 | 6,15 | 2,43 | 5,69 | 0,69 | 0,38 |
| 6 | 5,19 | 3,13 | 2,23 | 5,56 | 1,20 | 0,65 |
| 7 | 6,18 | 3,71 | 4,79 | 2,26 | 0,62 | 0,37 |
| 8 | 5,48 | 8,21 | 4,40 | 4,45 | 0,40 | 0,47 |
| 9 | 4,49 | 2,21 | 1,89 | 3,40 | 0,57 | 0,72 |
| 10 | 3,58 | 5,00 | 2,62 | 2,92 | 1,96 | 0,30 |
| Moyenne écart-type | 4,51 1,86 | 5,05 1,85 | 3,04 1,82 | 3,72 1,30 | 0,90 0,61 | 0,71 0,51 |

## TABLEAU II

|  | Haricots cocos | | Haricots lingots | | Haricots flageolets | |
|---|---|---|---|---|---|---|
| 1 | 2,10 | 3,07 | 2,88 | 1,99 | 1,43 | 1,80 |
| 2 | 2,26 | 2,23 | 2,40 | 2,49 | 1,32 | 1,89 |
| 3 | 2,06 | 2,33 | 2,42 | 1,77 | 1,24 | 1,43 |
| 4 | 2,42 | 2,41 | 2,06 | 2,00 | 1,83 | 1,51 |
| 5 | 2,53 | 2,16 | 2,33 | 2,51 | 1,26 | 1,30 |
| 6 | 2,44 | 2,10 | 1,80 | 2,34 | 1,41 | 1,1/ |
| 7 | 1,83 | 2,55 | 3,05 | 2,03 | 1,54 | 1,32 |
| 8 | 2,12 | 3,00 | 2,19 | 1,64 | 1,61 | 1,25 |
| 9 | 1,84 | 2,17 | 1,82 | 3,22 | 1,75 | 1,71 |
| 10 | 2,52 | 2,39 | 2,51 | 2,12 | 1,33 | 1,46 |
| Moyenne | 2,21 | 2,44 | 2,35 | 2,21 | 1,47 | 1,48 |
| écart-type | 0,25 | 0,32 | 0,41 | 0,43 | 0,19 | 0,23 |

## TABLEAU III

### Couleur des haricots traités

| VARIETE | TRAITEMENT | COULEUR | | |
|---|---|---|---|---|
| | | L | a | b |
| COCO | exemple 1 | 54,3 55,2 | 10,5 10,0 | 26,9 26,4 |
| | US.2278447 | 44,5 43,4 | 10,8 10,5 | 23,3 22,8 |
| LINGOT | exemple 2 | 61,7 60,8 | 9,3 9,4 | 28,2 27,8 |
| | US.2278447 | 43,8 46,5 | 10,8 10,0 | 23,5 23,4 |
| FLAGEOLET | exemple 3 | 55,4 56,1 | 0,8 0,9 | 30,6 30,3 |
| | US.2278447 | 45,9 45,4 | 4,0 4,4 | 27,2 27,8 |

## Revendications

1. Grain de haricot non cuit et se colorant en rose d'une manière homogène après immersion de 30 minutes dans un bain aqueux de fushine, caractérisé en ce que l'indice de brun (100-L), L étant la luminance au colorimètre Minolta CR 221, est inférieure à 50 et il est susceptible d'être obtenu par le procédé de la revendication 5.

2. Grain de haricot non cuit suivant la revendication 1, caractérisé en ce qu'il a une teneur pondérale en eau comprise entre 13,2 et 18 % quand il est de la variété lingot, comprise entre 13,2 et 20 quand il est de la variété coco et comprise entre 12,5 et 23.5 % quand il est de la variété flageolet, susceptible d'être obtenu par le procédé de la revendication 5.

3. Lot de grains de haricots non cuits suivant la revendication 1. caractérisé en ce que tous les grains du lot ont une teneur pondérale en eau comprise entre 42,5 et 53%, après trempage dans de l'eau à une température comprise entre 6°C et 80°C pendant 12 à 60 minutes, et susceptible d'être obtenu par le procédé de la revendication 5.

4. Lot de grains de haricots cuits dont l'indice de brun (100-L), L étant la luminance au colorimètre Minolta CR 221, est inférieur à 50, caractérisé en ce que tous les grains du lot ont une teneur pondérale en eau comprise entre 55 et 58 % et une dureté Instron comprise entre 1,5 et 4 avec un écart-type inférieur à 0,60 quand ils sont de la variété coco ou lingot et une teneur pondérale en eau comprise entre 58 et 61

EP 0 388 261 B1

et une dureté Instron comprise entre 1 et 3 avec un écart-type inférieur à 0,30 quand ils sont de la variété flageolet et il est susceptible d'être obtenu par le procédé de la revendication 6 ou 7.

5. Procédé de traitement de grains de haricot, caractérisé en ce qu'il consiste à les traiter à la vapeur sous la pression atmosphérique entre 100 et 120°C pendant 5 à 70 minutes; le temps d'application de la vapeur variant de façon inversement proportionnel à la température utilisée.

6. Procédé suivant la revendication 5, caractérisé en ce qu'il consiste à tremper les grains traités à la vapeur dans de l'eau à une température de 85°C à 100°C pendant 8 à 30 minutes, à les refroidir, à les égoutter, à les emballer et à les stériliser en autoclave.

7. Procédé suivant la revendication 5 ou 6, caractérisé en ce qu'il consiste à tremper les grains traités à la vapeur dans de l'eau à une température de 6°C à 80°C pendant 12 à 60 minutes, puis à les tremper dans de l'eau à une température de 85°C à 100°C pendant 10 à 15 minutes, à les refroidir, à les égoutter, à les emballer, et à les stériliser en autoclave.

8. Procédé suivant la revendication 5, 6 ou 7, caractérisé en ce qu'il consiste à emballer les haricots sans jus, sous une pression absolue d'air ou de gaz inerte comprise entre 0,3 et 1 bar, et, de préférence, entre 0,3 et 0,8 bar, dans un emballage étanche aux liquides, aux gaz et aux micro-organismes.

## Claims

1. Uncooked bean seed which turns uniformly pink in colour after 30 minutes' immersion in an aqueous fuscin bath, characterised in that the brown index (100-L) [where L is the luminance measured in a Minolta CR 221 colorimeter] is less than 50 and it can be obtained by the process according to claim 5.

2. Uncooked bean seed according to claim 1, characterised in that it has a water content, by weight, of between 13.2 and 18% when it is of the "lingot" variety, between 13.2 and 20% when it is of the "coco" variety and between 12.5 and 23.5% when it is of the "flageolet" variety, which may be obtained by the process according to claim 5.

3. Batch of uncooked bean seeds according to claim 1, characterised in that all the seeds in the batch have a water content, by weight, of between 42.5 and 53%, after soaking in water at a temperature between 6°C and 30°C for 12 to 60 minutes, and may be obtained by the process according to claim 5.

4. Batch of uncooked bean seeds having a brown index (100-L) of less than 50, where L is the luminance measured in a Minolta CR 221 colorimeter, characterised in that all the seeds in the batch have a water content, by weight, of between 55 and 58% and an Instron hardness of between 1.5 and 4 with a standard deviation of less than 0.60 when they are of the "coco" or "lingot" variety, and a water content, by weight, of between 58 and 61% and an Instron hardness of between 1 and 3 with a standard deviation of less than 0.30 when they are of the "flageolet" variety and may be obtained by the process according to claim 6 or 7.

5. Process for treating bean seeds, characterised in that it consists in steam-treating them at atmospheric pressure at between 100 and 120°C for 5 to 70 minutes, the steaming time varying in inverse proportion to the temperature used.

6. Process according to claim 5, characterised in that it consists in soaking the steam-treated seeds in water at a temperature of 85°C to 100°C for 8 to 30 minutes, cooling, draining and packing the seeds and sterilising them in an autoclave.

7. Process according to claim 5 or 6, characterised in that it consists in soaking the steam-treated seeds in water at a temperature of 6°C to 80°C for 12 to 60 minutes, then soaking them in water at a temperature of 85°C to 100°C for 10 to 15 minutes, cooling, draining and packing the seeds and sterilising them in an autoclave.

8. Process according to claim 5, 6 or 7, characterised in that it consists in packing the beans without any liquor, under an absolute pressure of air or inert gas of between 0.3 and 1 bar and, preferably, between 0.3 and 0.8 bar, in a pack which is sealed tight against liquids, gases and micro-organisms.

**Patentansprüche**

1. Ungekochte Bohne, welche sich nach 30-minütiger Behandlung in einem wässrigen Fuchsinbad in homogener Weise rosa färbt, dadurch gekennzeichnet, daß der Braun-Index (100 - L) weniger als 50 beträgt, wobei L die mit dem Minolta-Colorimeter CR 221 gemessene Luminanz ist, und daß sie nach dem Verfahren nach Anspruch 5 herstellbar ist.

2. Ungekochte Bohne nach Anspruch 1, dadurch gekennzeichnet, daß der Gewichtsanteil an Wasser zwischen 13,2 und 18% liegt, wenn es sich um Lingot-Bohnen handelt, zwischen 13,2 und 20% liegt, wenn es sich um Coco-Bohnen handelt und zwischen 12,5 und 23,5% liegt, wenn es sich um Flageolet-Bohnen handelt, und daß die Bohnen gemäß dem Verfahren nach Anspruch 5 herstellbar sind, wobei Lingot-Bohnen Stangenbohnen sind, die im Französischen als "haricot variete lingot" bezeichnet werden, Coco-Bohnen kleine runde Bohnen sind, die im Französischen als "haricot variete coco" bezeichnet werden, und Flageolet-Bohnen grün-weiße Bohnen sind, die im Französischen als "haricot variete flageolet" bezeichnet werden.

3. Menge an ungekochten Bohnen nach Anspruch 1, dadurch gekennzeichnet, daß die Bohnen nach Wässern in Wasser mit einer Temperatur zwischen 6°C und 30°C während 12 bis 60 Minuten einen Gewichtsanteil an Wasser aufweisen, der zwischen 42,5 und 53% beträgt, und daß die Bohnen durch das Verfahren nach Anspruch 5 herstellbar sind.

4. Menge gekochter Bohnen, deren Braun-Index (100 - L) weniger als 50 beträgt, wobei L die mit dem Minolta-Colorimeter CR 221 gemessene Luminanz ist, dadurch gekennzeichnet, daß alle Bohnen der Menge einen Gewichtsanteil an Wasser aufweisen, der zwischen 55 und 58% beträgt, und eine Instron-Härte haben, die zwischen 1,5 und 4 liegt, wobei eine Standardabweichung vorliegt, die kleiner ist als 0,6, wenn es sich um Coco-Bohnen oder Lingot-Bohnen handelt, bzw. einen Gewichtsanteil an Wasser zwischen 58 und 61% und eine Instron-Härte zwischen 1 und 3 aufweisen, wobei eine Standardabweichung vorliegt, die kleiner ist als 0,3, wenn es sich um Flageolet-Bohnen handelt, und daß die Bohnen nach dem Verfahren nach Anspruch 6 oder 7 herstellbar sind, wobei Lingot-Bohnen Stangenbohnen sind, die im Französischen als "haricot variete lingot" bezeichnet werden, Coco-Bohnen kleine runde Bohnen sind, die im Französischen als "haricot variété coco" bezeichnet werden, und Flageolet-Bohnen grünweiße Bohnen sind, die im Französischen als "haricot variété flageolet" bezeichnet werden.

5. Verfahren zum Behandeln von Bohnen, dadurch gekennzeichnet, daß die Bohnen 5 bis 70 Minuten mit atmosphärischem Dampf von zwischen 100 und 120°C behandelt werden, wobei die Dauer der Dampfbehandlung umgekehrt proportional zur verwendeten Behandlungstemperatur variiert.

6. Verfahren nach Anspruch 5, dadurch gekennzeichnet, daß die mit Dampf behandelten Bohnen während 8 bis 30 Minuten mit Wasser behandelt werden, welches eine Temperatur von 85°C bis 100°C aufweist, daß die Bohnen abgekühlt werden, daß man die Bohnen hierauf abtropfen läßt, verpackt und sie in einem Autoklaven sterilisiert.

7. Verfahren nach Anspruch 5 oder 6, dadurch gekennzeichnet, daß die mit Dampf behandelten Bohnen während 12 bis 60 Minuten in Wasser behandelt werden, welches eine Temperatur zwischen 6°C und 80°C aufweist, dann während 10 bis 15 Minuten in Wasser behandelt werden, welches eine Temperatur von 85°C bis 100°C aufweist, dann abgekühlt werden, daß man sie dann abtropfen läßt, verpackt und in einem Autoklaven sterilisiert.

8. Verfahren nach einem der Ansprüche 5, 6 oder 7, dadurch gekennzeichnet, daß die Bohnen ohne Flüssigkeit in einer Verpackung verpackt werden, die für Flüssigkeiten, Gase und Mikroorganismen undurchlässig ist, wobei der Absolutdruck der Luft oder eines inerten Gases auf einen Wert zwischen 0,3 und 1 bar, vorzugsweise zwischen 0,3 und 0,8 bar eingestellt wird.